Europäisches Patentamt

European Patent Office

Office européen des brevets

(11) Veröffentlichungsnummer: **0 142 089**
**B1**

# EUROPÄISCHE PATENTSCHRIFT

(45) Veröffentlichungstag der Patentschrift :
09.09.87

(51) Int. Cl.⁴ : **C 08 G 73/06**, C 25 B 3/00

(21) Anmeldenummer : 84112985.1

(22) Anmeldetag : 27.10.84

(54) Verfahren zur kontinuierlichen Herstellung von filmförmigen Polymeren von Pyrrolen.

(30) Priorität : 10.11.83 DE 3340679

(43) Veröffentlichungstag der Anmeldung :
22.05.85 Patentblatt 85/21

(45) Bekanntmachung des Hinweises auf die Patenterteilung : 09.09.87 Patentblatt 87/37

(84) Benannte Vertragsstaaten :
BE DE FR GB NL

(56) Entgegenhaltungen :
EP-A- 0 099 055
JOURNAL OF THE CHEMICAL SOCIETY, CHEMICAL COMMUNICATIONS, vol. 1, 1979, K.K. KANAZAWA et al. "'Organic Metals': Polypyrrole, a stable synthetic 'metallic' polymer", Seiten 854, 855

(73) Patentinhaber : BASF Aktiengesellschaft
Carl-Bosch-Strasse 38
D-6700 Ludwigshafen (DE)

(72) Erfinder : Naarmann, Herbert, Dr.
Haardtblick 15
D-6719 Wattenheim (DE)
Erfinder : Koessler, Ludwig
Schlachthofstrasse 24a
D-6718 Gruenstadt (DE)

## Beschreibung

Die Erfindung betrifft ein kontinuierliches Verfahren zur Herstellung von filmförmigen Polymeren von Pyrrolen durch elektrochemische Polymerisation von Pyrrolen alleine oder zusammen mit anderen Comonomeren in einem polaren Elektrolyt-Lösungsmittel in Gegenwart von Leitsalzen, wobei sich das durch anodische Oxidation gebildete Polymere filmförmig auf der flächigen Anode abscheidet.

Die elektrochemische Polymerisation von Pyrrolen ist bekannt (vgl. z. B. US-PS-3 574 072). Nach Arbeiten von A. F. Diaz et al, J. C. S. Chem. Comm. 1979, Seite 635 ; J. C. S. Chem. Comm. 1979, Seite 854 und ACS Org. Coat. Plast. Chem. 43 (1980) werden bei der anodischen Polymerisation von Pyrrol in Gegenwart von Leitsalzen Filme mit elektrischen Leitfähigkeiten bis zu $10^2$ $\Omega^{-1}$ $cm^{-1}$ gebildet. Hierbei handelt es sich um p-leitende Polypyrrole, wobei als Gegenanionen vor allem $BF_4^-$, $AsF_6^-$, $ClO_4^-$ und $HSO_4^-$ genannt werden.

Bei den bislang beschriebenen Verfahren zur Herstellung von Polypyrrol-Filmen wird die elektrochemische Polymerisation in einer üblichen elektrolytischen Zelle mit oder ohne Diaphragma im allgemeinen mit Edelmetall-Elektroden, insbesondere Platin-Elektroden, durchgeführt. Das durch anodische Oxidation gebildete Polypyrrol scheidet sich dabei als Film auf der flächig ausgebildeten Anode ab. Ein gravierender Nachteil dieser Verfahrensweise ist, daß die Größe des resultierenden Polypyrrol-Filmes durch die Größe der Anoden-Fläche limitiert ist. Für die Herstellung von großen Filmen braucht man entsprechende großflächige Anoden, was apparativ sehr aufwendig ist. Außerdem ist die Herstellung größerer Mengen an Polypyrrol-Filmen wegen der diskontinuierlichen Arbeitsweise beschwerlich und arbeitsaufwendig.

Man hat daher in der EP-A-0 099 055 (AM. 54(3)-Dokument) schon eine Arbeitsweise vorgeschlagen, bei der eine flächenförmig ausgebildete Anode fortlaufend durch eine Elektrolyselösung hindurchführt, die Pyrrol oder Gemische von Pyrrol mit anderen Comonomeren sowie Leitsalze enthält, wobei sich das entstehende Polypyrrol bandförmig auf der Anode abscheidet.

Aufgabe der vorliegenden Erfindung ist es, ein leicht durchführbares Verfahren zur Herstellung von elektrisch hochleitfähigen filmförmigen Polymeren von Pyrrolen aufzuzeigen, welches die Herstellung solcher Filme in großen Mengen und in beliebiger Größe in einfacher und wirtschaftlicher Weise gestattet, wobei eine gleichmäßige Dicke, eine glatte Oberfläche und homogene elektrische Leitfähigkeit über die Gesamtfläche des Polymerfilmes erreicht werden.

Diese Aufgabe wird erfindungsgemäß dadurch gelöst, ein Verfahren zur kontinuierlichen Herstellung von filmförmigen Polymeren von Pyrrolen durch elektrochemische Polymerisation von Pyrrolen oder Mischungen von Pyrrolen mit anderen Comonomeren in einem polaren Elektrolyt-Lösungsmittel in Gegenwart von Leitsalzen unter Abscheiden des Polymerfilms auf der Oberfläche der Anode, welches dadurch gekennzeichnet ist, daß man fortlaufend durch die Elektrolyt-Lösung flächenförmig ausgebildete Elektroden für die Abscheidung des filmförmigen Polymeren hindurchführt und die Elektroden wechselseitig als Anode oder Kathode schaltet.

Spezielle und bevorzugte Ausgestaltungsformen des erfindungsgemäßen Verfahrens ergeben sich aus der nachfolgenden detaillierten Beschreibung und den Patentansprüchen.

Durch das erfindungsgemäße kontinuierliche Verfahren ist es möglich, Filme von Pyrrol-Polymeren in einfacher und wirtschaftlicher Weise in beliebigen Größen herzustellen. Die Filme lassen sich auch beim Abscheiden der Pyrrol-Polymeren in dünneren Schichten, etwa in einer Schichtstärke von 10 bis 20 µm, problemlos und ohne Schwierigkeiten direkt nach der Herstellung von der Oberfläche des anodenaktiven Materials abziehen und beispielsweise auf einen Wickel aufrollen. Trotz der Tatsache, daß das anodenaktive Material fortlaufend durch die Elektrolyt-Lösung bewegt und durchgeführt wird, wodurch es zu unterschiedlichen Abständen zwischen den Elektroden damit zu unterschiedlichen Stromdichten bei der Elektrolyse als auch zu unterschiedlichen Elektrolyt-Konzentrationen kommen kann, hat es sich gezeigt, daß die erhaltenen filmförmigen Polymeren von den Pyrrolen sehr homogen und einheitlich aufgebaut sind und eine weitgehend gleichmäßige elektrische Leitfähigkeit über ihre Gesamtfläche besitzen.

Unter Pyrrolen werden im Rahmen dieser Erfindung das unsubstituierte Pyrrol selber als auch die substituierten Pyrrole, wie die N-Alkyl-pyrrole, N-Arylpyrrole, die an den C-Atomen monoalkyl- oder dialkylsubstituierten Pyrrole und die an den C-Atomen monohalogen- oder dihalogensubstituierten Pyrrole verstanden. Die Pyrrole können alleine oder in Mischung miteinander eingesetzt werden. Vorzugsweise geht man zur Herstellung der filmförmigen Polymeren vom unsubstituierten Pyrrol selber aus. Werden substituierte Pyrrole in dem erfindungsgemäßen Verfahren eingesetzt, sind hierfür die 3,4-Dialkylpyrrole, insbesondere solche mit 1 bis 4 C-Atomen im Alkylrest, wie 3,4-Dimethylpyrrol und 3,4-Diethylpyrrol, wie auch die 3,4-Dihalogenpyrrole, insbesondere 3,4-Dichlorpyrrol, bevorzugt.

Als Comonomere, die zusammen mit den Pyrrolen in dem erfindungsgemäßen Verfahren eingesetzt werden können, kommen neben Alkinen, wie z. B. Acetylen, und mehrkernigen Aromaten, wie z. B. den Oligophenylenen, Acenaphthen, Phenanthren oder Tetracen, insbesondere andere 5- und/oder 6-gliedrige heterocyclische aromatische Verbindungen in Betracht. Bei diesen anderen heteroaromatischen Verbindungen, die vorzugsweise 1 bis 3 Heteroatome im Ringsystem enthalten und die an den Heteroatomen oder den Ring-Kohlenstoffatomen beispielsweise durch Alkylgruppen, insbesondere mit 1 bis 6 C-Atomen, substituiert sein können, sind vorzugsweise mindestens zwei Ring-Kohlenstoffatome nicht substituiert, um die anodische Oxidation einfach und gut durchführen zu können. Beispiele für heteroaromatische Verbindungen, die als Comonomere gut geeignet sind und die hierbei allein oder in Mischung miteinander zum Einsatz kommen können, sind Furan, Thiophen, Thiazol, Oxazol, Thiadiazol, Imidazol, Pyridin, 3,5-Dimethylpyridin, Pyrazin und 3,5-Dimethylpyrazin. Außerdem sind aromatische Amine wie Anilin, o- und/oder p-Phenylendiamin geeignet. Besonders bewährt haben sich als Comonomere die 5-gliedrigen heteroaromatischen Verbindungen, wie Furan, Thiophen, Thiazol und Thiadiazol. Werden in dem erfindungsgemäßen Verfahren Pyrrole zusammen mit anderen Comonomeren eingesetzt, so kann das Gewichtsverhältnis der Pyrrole zu den anderen Comonomeren in weiten Grenzen, z. B. von 1 : 99 bis 99 : 1, schwanken. Vorzugsweise enthalten solche Comonomer-Mischungen 20 bis 90 Gew.-% der Pyrrole und 80 bis 10 Gew.-% der anderen Comonomeren, jeweils bezogen auf die Summe von Pyrrolen und anderen Comonomeren.

Zur Herstellung der filmförmigen Polymeren werden die Monomeren, das sind die Pyrrole sowie gegebenenfalls die anderen Comonomeren, in einem polaren, vorteilhaft einem polaren organischen Lösungsmittel in Gegenwart eines Leitsalzes anodisch oxidiert und dabei polymerisiert. Die Monomer-Konzentration beträgt hierbei üblicherweise etwa 0,1 Mol pro Liter Lösungsmittel. Diese Konzentration kann jedoch in weiten Grenzen unterschritten aber auch überschritten werden. Da in dem erfindungsgemäßen kontinuierlichen Verfahren die Konzentration der Monomeren und des Leitsalzes in der Elektrolyt-Lösung bei hinreichend langer Elektrolyse-Dauer allmählich abnimmt, kann die Elektrolyt-Lösung im Bedarfsfall auch aufgefrischt werden, d. h. es können frische Monomeren und/oder Leitsalz während der Elektrolyse nachdosiert werden. Dies geschieht am besten durch Umpumpen der Elektrolyt-Lösung und Zudosieren der Monomeren und/oder des Leitsalzes in dem gewünschten Maße außerhalb der eigentlichen Elektrolysevorrichtung. Es sei jedoch hervorgehoben, daß für das erfindungsgemäße kontinuierliche Verfahren und die Herstellung von einheitlichen gleichförmigen Polymer-Filmen die Konzentration an Monomeren und/oder Leitsalz in der Elektrolyt-Lösung nicht zwingendermaßen konstant gehalten werden muß, so daß das erfindungsgemäße Verfahren in einem einfachen geschlossenen Elektrolysegefäß ohne Umlauf der Elektrolyt-Lösung durchgeführt werden kann. Dies gilt insbesondere bei der üblichen Verfahrensweise, bei der nur bis zu vergleichsweise geringen Umsätzen gearbeitet wird.

Als Elektrolyt-Lösungsmittel können in dem erfindungsgemäßen Verfahren die für die elektrochemische Polymerisation von Pyrrolen an sich bekannten und üblichen polaren organischen Lösungsmittel, die die Monomeren und das Leitsalz zu lösen vermögen, eingesetzt werden. Wenn mit Wasser mischbare organische Lösungsmittel Einsatz finden, kann zur Erhöhung der elektrischen Leitfähigkeit eine geringe Menge an Wasser, im allgemeinen bis zu 10 Gew.%, bezogen auf das organische Lösungsmittel, zugesetzt werden, auch wenn in der Regel in einem wasserfreien System gearbeitet wird. Das Lösungsmittel selbst kann aprotisch sein. Bevorzugte Elektrolyt-Lösungsmittel sind z. B. Alkohole, Ether wie 1,2-Dimethoxyethan, Dioxan, Tetrahydrofuran und Methyltetrahydrofuran, Aceton, Acetonitril, Dimethylformamid, Dimethylsulfoxid, Methylenchlorid, N-Methylpyrrolidon und Propylencarbonat, ebenso Gemische dieser Lösungsmittel oder auch Polyglykole, die sich vom Ethylenglykol, Propylenglykol oder Tetrahydrofuran ableiten, wie z. B. Polyethylenglykol, Polypropylenglykol, Polybutylenglykol oder Ethylenoxid-/Propylenoxid-Mischpolymere, und die vorzugsweise durch Endgruppenverschluß als vollständige Polyether vorliegen. Gegebenenfalls kann auch in Wasser als Elektrolyt gearbeitet werden.

Als Leitsalze können in dem erfindungsgemäßen Verfahren ebenfalls die für die elektrochemische Polymerisation von Pyrrolen an sich bekannten und üblichen ionischen oder ionisierbaren Verbindungen eingesetzt werden, insbesondere solche mit Anionen starker, oxidierender Säuren oder von gegebenenfalls mit Alkyl- und/oder Nitro-Gruppen substituierten Aromaten mit sauren Gruppen. Bevorzugte Leitsalze enthalten als Kationen die Alkalimetall-Kationen, insbesondere $Li^+$, $Na^+$ oder $K^+$, die $NO^+$- und $NO_2^+$-Kationen sowie insbesondere die Onium-Kationen, vor allem des Stickstoffs und des Phosphors, etwa des Typs $R_4N^+$ und $R_4P^+$, worin R Wasserstoff und/oder niedere Alkylreste, vorzugsweise mit 1 bis 6 C-Atomen, cycloaliphatische Reste, vorzugsweise mit 6 bis 14 C-Atomen, oder aromatische Reste, vorzugsweise mit 6 bis 14 C-Atomen, bedeutet. Beispielhaft für derartige Onium-Kationen seien das Tetramethylammonium-, das Tetraethylammonium-, das Tri-n-butylammonium-, das Tetra-n-butylammonium-, das Triphenylphosphonium- und das Tri-n-butylphosphonium-Kation genannt. Als Anionen für die Leitsalze haben sich $BF_4^-$, $AsF_4^-$, $AsF_6^-$, $SbF_6^-$, $SbCl_6^-$, $PF_6^-$, $ClO_4^-$, $HSO_4^-$ und $SO_4^{2-}$ als besonders günstig erwiesen. Bei einer weiteren Gruppe von Leitsalzen, die mit besonderem Vorteil in dem erfindungsgemäßen Verfahren eingesetzt werden, leiten sich die Anionen von Aromaten mit sauren Gruppen ab. Hierzu gehören neben dem $C_6H_5COO^-$-Anion insbesondere die Anionen von gegebenenfalls mit Alkylgruppen substituierten aromatischen Sulfonsäuren. Besonders bevorzugt sind Leitsalze, die das Benzolsulfonat- oder Tosylat-Anion enthalten. In einer weiteren sehr günstigen Ausführungsform können die Aromaten mit sauren Gruppen auch noch mit Nitro-Gruppen substituiert sein. Zu den Leitsalzen auf Basis dieser sauren Nitroaromaten zählen z. B. die Salze von Nitrophenolen, von Nitrogruppen-substituierten aromatischen Carbonsäuren und von Nitrogruppen-substituierten aromatischen Sulfonsäuren. Insbesondere finden die Salze von Nitro-, Dinitro- und Trinitrophenolen, Nitro-, Dinitro- und Trinitrobenzoesäuren sowie Nitro-, Dinitro- und Trinitrobenzolsulfonsäuren Einsatz. Gegebenenfalls sind auch aliphatische oder cycloaliphatische Sulfosäuren wie Laurylsulfat geeignet.

Die Leitsalzkonzentration in dem erfindungsgemäßen Verfahren beträgt im allgemeinen 0,001 bis 1, vorzugsweise 0,01 bis 0,1 Mol pro Liter.

Das erfindungsgemäße Verfahren kann in einer elektrolytischen Zelle oder Elektrolyse-Apparatur, bestehend aus einer Zelle mit oder ohne Diaphragma, den beiden Elektroden und einer externen Gleichstromquelle, durchgeführt werden. Erfindungswesentliches Merkmal ist, daß die elektrochemische Polymerisation dabei kontinuierlich mittels der beweglichen Elektroden betrieben wird, indem man fortlaufend flächenförmig ausgebildete Elektroden durch die Elektrolyt-Lösung durchführt.

Dies kann in einer einfachen und sehr günstigen Ausführungsform der Erfindung in der Weise verwirklicht werden, daß die Elektroden auf die Oberfläche von Zylindern aufgebracht sind bzw. die Oberfläche dieser Zylinder darstellen, wobei diese Zylinder während der Elektrolyse in der Elektrolyt-Lösung rotieren. Unter Zylinder wird hierbei sowohl eine Zylinderwalze als auch einfach nur ein Zylinder-Mantel, d. h. ein Hohlzylinder, verstanden. Anstelle von Zylindern können gleichermaßen und mit gleichem Vorteil auch endlose, um Walzen laufende Bänder eingesetzt werden, die auf ihrer Oberfläche das elektrodenaktive Material enthalten. Die Zylinder bzw. die endlosen Bänder werden mit einer solchen Geschwindigkeit durch die Elektrolyt-Lösung bewegt, daß sich unter den jeweiligen Elektrolyse-Bedingungen ein Polymer-Film von der gewünschten Stärke auf der als Anode geschalteten Elektrode abscheidet. Das gebildete filmförmige Polymere wird dann fortlaufend von der Oberfläche des durch die Elektrolyt-Lösung rotierenden Zylinders bzw. der Oberfläche des durch die Elektrolyt-Lösung transportierten endlosen Bandes abgezogen und kann, gegebenenfalls nach Spülen mit einem Lösungsmittel zur Entfernung von anhaftendem Leitsalz und Trocknen, aufgewickelt werden.

Bei dieser Ausführungsform des erfindungsgemäßen Verfahrens kann der Zylinder bzw. das um Walzen laufende endlose Band vollständig in die Elektrolyt-Lösung eingetaucht sein. In diesem Fall muß der entstehende Polymer-Film in der Elektrolyt-Lösung von der Oberfläche der Elektrode abgehoben und abgezogen werden, wozu man sich vorteilhafterweise einer geeigneten Abhebevorrichtung, beispielsweise eines Schabers, Abstreifmessers oder einer synchron laufenden ein- oder beidseitigen Kontakt-Klebefolie, bedient. Im allgemeinen ist es jedoch einfacher und günstiger, wenn der rotierende Zylinder bzw. das um Walzen laufende endlose Band nur teilweise in die Elektrolyt-Lösung eintaucht, so daß das in der Elektrolyt-Lösung auf den Elektroden abgeschiedene filmförmige Polymere aus der Elektrolyt-Lösung heraustransportiert wird, außerhalb der Elektrolyt-Lösung, gegebenenfalls mit Hilfe einer wie oben erwähnten geeigneten Abhebevorrichtung, von der Oberfläche des Zylinders bzw. des endlosen Bandes abgetrennt und abgezogen werden kann und danach die Elektroden mit freier, unbeschichteter Oberfläche wieder in die Elektrolyt-Lösung eingezogen werden. Diese letztgenannte Arbeitsweise, bei der die rotierenden Zylinder bzw. die um Walzen laufenden endlosen Bänder nur teilweise in die Elektrolyt-Lösung eintauchen, bringt bei der Handhabung und insbesondere beim Abziehen des filmförmigen Polymeren von den Elektroden wesentliche Vorteile mit sich.

In einer anderen Durchführungsform des erfindungsgemäßen Verfahrens können die Elektroden in Form eines endlichen Bandes beispielsweise von einem Wickel, der sich außerhalb der Elektrolyt-Lösung befindet, in die Elektrolyt-Lösung eingezogen, durch diese hindurchtransportiert und wieder aus der Elektrolyt-Lösung ausgetragen werden. Der Transport der Elektroden durch die Elektrolyt-Lösung findet auch in diesem Fall mit einer Geschwindigkeit statt, die es gestattet, unter den gegebenen Elektrolyse-Bedingungen einen Polymer-Film in der gewünschten Dicke auf den Elektroden abzuscheiden.

Bei dieser Ausführungsform des erfindungsgemäßen Verfahrens ist es zwar möglich, jedoch nicht nötig, das abgeschiedene filmförmige Polymere von den Elektroden abzutrennen. Das Arbeiten mit Elektroden in Form eines endlichen Bandes empfiehlt sich daher insbesondere immer dann, wenn der erhaltene Polymer-Film auf den Elektroden verbleiben soll. Dies kann beispielsweise für besondere Anwendungszwecke, etwa die Herstellung spezieller Elektroden-Materialien, wünschenswert sein. Die Ausführungsform, als Elektroden endliche Bänder einzusetzen, bietet darüber hinaus die Möglichkeit, in einfacher und bequemer Weise in dem erfindungsgemäßen Verfahren verschiedenartige Elektroden, die dann auch als Substrate für den erhaltenen Polymer-Film dienen können, einzusetzen. Wie bereits erwähnt, ist es bei Einsatz von endlichen Bändern als Elektroden zweckmäßig, die Elektroden von außerhalb in die Elektrolyt-Lösung einzuziehen und nach der elektrochemischen Polymerisation wieder aus der Elektrolyt-Lösung auszutragen.

Die Elektroden können in dem erfindungsgemäßen Verfahren segmentiert vorliegen, d. h. in Form von diskreten Abschnitten und Flächen, die auf einem geeigneten Träger, z. B. einem Zylindermantel, der Oberfläche eines um Walzen laufenden endlosen Bandes oder eines endlichen Bandes, aufgebracht sind. In diesem Fall erhält man kontinuierlich einzelne Polymer-Filme in der Größe der segmentierten, diskreten Flächen der Elektroden. Bei Einsatz von derart segmentierter Elektroden kann der Transport durch die Elektrolyt-Lösung auf dem Träger nicht nur vollkontinuierlich, sondern auch abschnittsweise fortlaufend in der Art geschehen, daß eine oder mehrere segmentierte Flächen der Elektroden durch Transport des Trägers in die Elektrolyt-Lösung eingebracht werden, die elektrochemische Polymerisation unter Abscheiden des filmförmigen Polymeren auf den segmentierten Flächen der Elektroden ohne weiteren Transport des Trägers erfolgt und anschließend die mit dem Polymeren beschichteten segmentierten Flächen der Elektroden durch Transport des Trägers aus der Elektrolyt-Lösung ausgetragen werden, wobei gleichzeitig eine oder mehrere neue unbeschichtete segmentierte Flächen der Elektroden in die Elektrolyt-Lösung eingebracht werden.

Im allgemeinen wird das erfindungsgemäße Verfahren jedoch mit bandförmig ausgebildeten, d. h. zusammenhängenden Elektroden betrieben. Beispiele hierfür sind u. a. die Oberflächen von Zylindern, die die Elektrode darstellt sowie von Walzen umlaufende endlose bzw. endliche Bänder, deren gesamte Oberfläche die Elektrode bildet. In diesem Fall werden die Elektroden üblicherweise vollkontinuierlich, d. h. auch während der Elektrolyse und Polymer-Abscheidung, durch die Elektrolyt-Lösung transportiert. Man erhält hierbei zusammenhängende Polymer-Filme beliebiger Länge, die aufgewickelt oder je nach Anwendungszweck in die entsprechende und gewünschte Größe zugeschnitten werden können. Auf diese Weise ist es möglich, sehr lange und elektrisch hochleitfähige Filme, Bänder oder Streifen aus den Pyrrol-Polymeren herzustellen.

In dem erfindungsgemäßen Verfahren kann grundsätzlich jedes beliebige und bekannte Elektroden-Material eingesetzt werden. Falls es die Oberfläche eines Zylinders oder eines endlosen Bandes darstellt, muß es darüber hinaus so beschaffen sein, daß sich das gebildete filmförmige Polymere hiervon ohne Schwierigkeiten abziehen läßt. Als Material, das sich für Elektroden eignet, kommen hierbei insbesondere Metalle, wie z. B. Platin, Molybdän, Wolfram oder Edelstähle, vorzugsweise Nickel oder Titan, in Betracht, wobei die Oberfläche der Elektroden vorteilhafterweise möglichst glatt ist. In dem Fall, in dem die Elektrode die Oberfläche eines endlichen Bandes darstellt, welches beispielsweise von einem Wickel in die Elektrolyt-Lösung eingezogen wird, können als Elektroden neben den genannten Metallen auch solche Stoffe eingesetzt werden, auf denen das erhaltene filmförmige Polymere fest haftet, so daß es von dem anodenaktiven Material nicht oder nur sehr schwierig abgetrennt werden kann. Dies ist beispielsweise der Fall, wenn als Material für die Elektrode elektrisch leitfähige Polymere, wie Polypyrrol, p-leitendes Polyacetylen oder p-leitendes Polyphenylen, verwendet werden. Die elektrisch leitfähigen Polymeren können dabei unmittelbar in Filmform eingesetzt oder in geeigneter Weise auf einen Träger aufgebracht werden. Auch durch Zusätze wie Ruß, feinteiligen leitfähigen Polymeren oder Metallpulver können Filme leitfähig gemacht werden. So eignen sich z. B. rußgefulltes Polyethylen und kupferbedampftes Polyethylen auch als Elektrodenmaterial. Die Pyrrole und die gegebenenfalls mitverwendeten Comonomeren werden hierbei auf die als Elektroden eingesetzten, elektrisch leitfähigen Polymeren unter Ausbildung von chemischen Bindungen aufpolymerisiert, so daß man auf diese Weise einen schichtförmig aufgebauten Copolymerfilm hoher elektrischer Leitfähigkeit in beliebiger Länge und Größe herstellen kann.

In dem Fall, in dem das gebildete filmförmige Polymere von den Elektroden abgezogen wird, beispielsweise bei Verwendung eines rotierenden Zylinders oder eines um Walzen laufenden endlosen Bandes, hat es sich als sehr günstig erwiesen, wenn die längsseitigen Ränder der Elektroden oberflächlich mit einem elektrisch nicht leitenden Material beschichtet sind. Für diese Beschichtung kommen beispielsweise Polymere, wie etwa Polyethylen, Polypropylen, Polystyrol und insbesondere Polytetrafluorethylen und ähnliche, in Betracht. Eine derartige Randbeschichtung erleichtert das Abziehen des Polymer-Filmes von den Elektroden, da sich das Polymere nur zwischen den beschichteten Rändern auf den Elektroden abscheidet und so beim Abziehen des Polymer-Filmes an diesen Rändern keine Probleme auftreten. Gleichermaßen ist es bei Einsatz eines um Walzen laufenden endlosen Bandes zu empfehlen, wenn die Rückseite des Bandes, d. h. also die Oberfläche, die über die Transportwalzen läuft, aus einem elektrisch nicht leitenden Material besteht bzw. mit einem solchen beschichtet ist, so daß sich das Polymere nur auf der Oberseite des endlosen Bandes abscheiden kann. Gleiches gilt selbstverständlich auch bei Einsatz eines rotierenden Zylinders oder Zylindermantels, der so gestaltet ist, daß nur die äußere Oberfläche des Zylindermantels die Elektrode bildet.

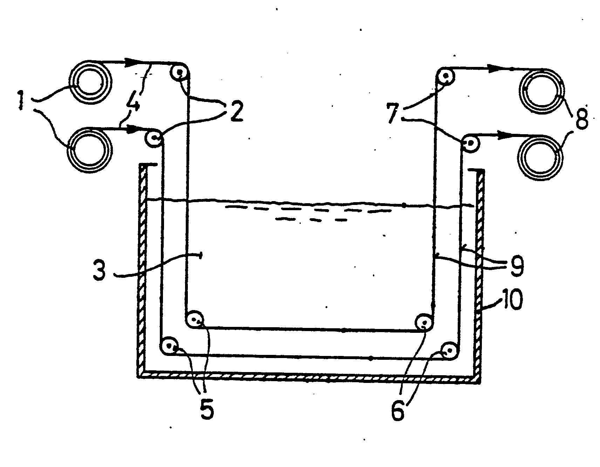

Eine bevorzugte Ausführungsform erfolgt entsprechend den Angaben der Fig. 1.

Von den Wickeln 1 wird das elektrodenaktive Material 4 über die Führungsspulen 2 durch den Elektrolyten 3 kontinuierlich bewegt. Während des Durchziehens des elektrodenaktiven Materials (z. B. rußgefülltem Polyethylen mit einer Ausgangsleitfähigkeit von $10^{-3}$ s/cm) erfolgt das Abscheiden des Polypyrrols auf beiden Elektroden. Die Elektroden werden über die Rollen 5, 6 und 7 geführt.

Die mit Polypyrrol beschichteten Filme 9 werden auf den Spulen 8 aufgewickelt und nachfolgend aufgearbeitet und nachbehandelt. Als Elektrolysegefäß 10 verwendet man zweckmäßig ein Glasgefäß.

Neben einer einfachen Elektrolyse-Apparatur aus dem Elektrolyse-Gefäß für die Elektrolyt-Lösung sowie den Elektroden der beschriebenen Art können auch weiter ausgestaltete Elektrolyse-Einrichtungen für das erfindungsgemäße Verfahren Einsatz finden, die beispielsweise zwischen den Elektroden ein Diaphragma enthalten. Zur Kontrolle der Schichtstärke der abgesshiedenen Filme ist eine Messung der Strommenge (Asek.) oder auch der Stromdichte (A/cm²) zweckmäßig.

Die Reaktionstemperatur, bei der das erfindungsgemäße Verfahren betrieben wird, hat sich als unkritisch erwiesen, so daß sie in einem breiten Bereich variiert werden kann, solange die Erstarrungstemperatur bzw. Siedetemperatur des Elektrolyt-Lösungmittels nicht unter- bzw. überschritten wird. Im allgemeinen hat sich eine Reaktionstemperatur im Bereich von — 40 bis + 40 °C als sehr vorteilhaft erwiesen, wobei normalerweise und vorzugsweise bei Raumtemperatur (22 bis 24 °C) gearbeitet wird. Es ist zwar nicht notwendig, kann jedoch vorteilhaft sein, wenn die Elektrolyse unter Inertgas durchgeführt wird. Die Elektrolyt-Lösung kann während der Elektrolyse gerührt werden.

Als vorteilhaft hat sich das Umpumpen der Elektrolyt-Lösung erwiesen, wobei definierte Arbeitstemperaturen über einen Thermostaten erreicht werden.

Im übrigen können in dem erfindungsgemäßen Verfahren die für die elektrochemische Polymerisation von Pyrrolen üblichen und bekannten Elektrolyse-Bedingungen angewandt werden. Zweckmäßigerweise liegt die Spannung, mit der die Elektrolyse betrieben wird, im Bereich von etwa 1 bis 150 Volt, vorzugsweise im Bereich von 2 bis 20 Volt. Für die Stromdichte haben sich Werte im Bereich von 0,05 bis 100 mA/cm², vorzugsweise im Bereich von 0,1 bis 3,50 mA/cm², als besonders vorteilhaft erwiesen. Zweckmäßig ist ein kontinuierliches Zudosieren der Elektrolyt-Lösung, wobei das durch die Polymerisation abgeschiedene Polypyrrol einschließlich des jeweiligen Leitsatzes ersetzt wird.

Das wesentliche Kennzeichen des erfindungsgemäßen Verfahrens ist das ständige Umpolen bzw. Umschalten der Spannung an den Elektroden.

Beispielsweise wird die umgelegte Spannung von 16 Volt nach 10 Minuten umgepolt, so daß die als Anode geschaltete Elektrode jetzt zur Kathode wird, — umgekehrt wurde durch das Umpolen die vorher als Kathode geschaltete Elektrode jetzt Anode. Die Zeit zwischen dem Umpolen der Elektroden von + nach — und umgekehrt kann in weiten Grenzen schwanken, beispielsweise zwischen 0,01 und 1 000 Sekunden, vorzugsweise wird mit Umpolzeiten von 0,1 bis 100 Sekunden gearbeitet. Der nach dem Verfahren hergestellte Film zeigt gegenüber den nach bekannten Verfahren hergestellten Filmen einige deutliche Unterschiede :

1. Das Verhältnis Pyrrol : Gegenion beträgt nach den bekannten Verfahren 3 oder 4 : 1.

Nach diesem Verfahren ist der Anteil des Gegenions deutlich geringer und das Pyrrol : Gegenion-Verhältnis ist z. B. 6 : 1 bis 12 : 1.

2. Die Filme zeigen eine größere Oberfläche, 30 bis 50 m²/g, im Gegensatz dazu beträgt die Oberfläche der nach den bisherigen Verfahren hergestellten Filme < 10 m²/g.

3. Die Filme sind unempfindlich gegen Schwankungen der Leitfähigkeit, über 3 Wochen bleibt eine Leitfähigkeit von 10 $\Omega^{-1}$ cm$^{-1}$ erhalten, während die Leitfähigkeit der nach bekannten Verfahren hergestellten Filme in Abhängigkeit von der Luftfeuchtigkeit Schwankungen ± 10 % zeigen.

4. Die Leitfähigkeit der erfindungsgemäßen Filme ist an Ober- und Unterseite des Films unterschiedlich und kann beispielsweise um 3 Größenordnungen variieren ; während die nach bekannten Verfahren hergestellten Filme im Bereich der Meßgenauigkeit liegen.

Mit dem erfindungsgemäßen Verfahren können selbsttragende Filme unterschiedlicher Schichtstärke hergestellt werden. Im allgemeinen liegt die Dicke der erhaltenen Filme im Bereich von 10 bis 100 µm. Die Filmdicke kann dabei durch die Verweilzeit der Elektroden in der Elektrolyt-Lösung als auch insbesondere über die Stromdichte variiert und eingestellt werden. Die erhaltenen Filme der Polymeren der Pyrrole können zur Entfernung von anhaftendem Leitsalz mit Lösungsmitteln gewaschen und bei Temperaturen von 30 bis 150 °C, vorzugsweise unter Vakuum, getrocknet werden. Die Filme lassen sich anschließend in jeder gewünschten Form weiterverarbeiten und für die verschiedensten Anwendungen einsetzten.

Bei den erfindungsgemäß hergestellten filmförmigen Polymeren von Pyrrolen handelt es sich um elektrisch hochleitfähige Systeme, die zumindest teilweise das Anion des bei ihrer Herstellung verwendeten Leitsalzes enthalten. Man kann diese Polymere daher auch als Komplexe aus Kationen der Polymeren der Pyrrole und Gegenanionen bezeichnen. Die elektrische Leitfähigkeit der Polymeren der Pyrrole liegt im allgemeinen im Bereich von 10° bis 10² $\Omega^{-1}$ cm$^{-1}$, gemessen nach der Zweipunkt- oder Vierpunkt-Methode. Auch im übrigen besitzen die nach dem erfindungsgemäßen kontinuierlichen Verfahren hergestellten filmförmigen Polymeren der Pyrrole die gleichen Eigenschaften wie die nach den bekannten elektrochemischen Verfahren hergestellten Produkte. Sie finden — wie diese — Anwendung bei der Herstellung von Elektroden, Katalysatoren, elektrischen Speichersystemen, Batterien, Schaltern, Halbleiter-Bauteilen, Abschirmmaterialien, Solarzellen und anderem sowie zur antistatischen Ausrüstung von Kunststoffen.

Die Erfindung wird durch die nachfolgenden Beispiele näher erläutert. Die in den Beispielen angegebenen Teile und Prozente beziehen sich, sofern nicht anders vermerkt, auf das Gewicht.

Beispiel 1

Es wurde in einer Elektrolyse-Apparatur gearbeitet, wie sie in Figur 1 schematisch dargestellt ist. Das Elektrolyse-Gefäß (10) bestand aus Glas und enthielt eine Elektrolyt-Lösung (3)

von 3 200 ml Acetonitril, 15 g Pyrrol und 25 g des Tri-n-butylammonium-salzes der Benzolsulfonsäure. Als Elektroden (1) dienten 10 cm breite Nickelbleche. Die Elektroden (1) waren so angeordnet, daß ihr Abstand 35 mm betrug. Die Elektrolyse wurde mit einer Stromdichte von 1,5 mA/cm$^2$ betrieben. Im Zeitabstand von je 5 Minuten wurde umgepolt, d. h. die vorher positive Zylinderwalze wurde negativ und umgekehrt. Die Elektroden bewegten sich mit einer Geschwindigkeit von 1 m/h. Während der Elektrolyse wurde die Elektrolyt-Lösung (3) mit einem Magnet-Rührer gerührt. Es schieden sich auf der Oberfläche der Elektroden (1) Polypyrrol-Filme in einer Stärke von 28 μm ab, die sich außerhalb der Elektrolyt-Lösung (3) problemlos von den Elektroden (1) abziehen ließen. Die Elektrolyse wurde über einen zeitraum von 24 Stunden ununterbrochen betrieben. Die erhaltenen Polypyrrol-Filme hatten eine Leitfähigkeit von 10 $\Omega^{-1}$ cm$^{-1}$. Die Filme wurden jeweils mit Acetonitril gespült und bei 30 mbar und 50 °C unter N$_2$ getrocknet.

Beispiel 2

Es wurde wie in Beispiel 1 beschrieben gearbeitet, jedoch zusätzlich 5 g Anilin zugegeben. Es wurde ein Copolymer-Film von 30 μm Dicke erhalten.

Die Leitfähigkeit der Filme von der Anode betrug 55 $\Omega^{-1} \cdot$ cm$^{-1}$ und die des Films von der zuletzt als Kathode geschalteten Elektrode $5 \cdot 10^{-2}$ $\Omega^{-1} \cdot$ cm$^{-1}$.

Beispiel 3

Es wurde wie in Beispiel 1 gearbeitet mit dem Unterschied, daß diesmal mit einer Stromdichte von 5 mA/cm$^2$ elektrolysiert wurde und die Elektroden nach 60 Sekunden umgepolt wurden. Der erhaltene Copolymer-Film hatte eine Schichtstärke von ca. 40 μm und eine elektrische Leitfähigkeit von 60$^{-1}$ cm$^{-1}$ für den Film von der Anode, der Film auf dem Blech der zuletzt als Kathode geschalteten Elektrode war 65 μm stark und hatte eine Leitfähigkeit von 10$^{-1}$ $\Omega^{-1}$ cm$^{-1}$.

Beispiel 4

Es wurde wie in Beispiel 1 beschrieben gearbeitet, als Monomeren diesmal jedoch eine Mischung aus 7,5 g Pyrrol und 7,5 g Furan eingesetzt. Der erhaltene elektrisch hochleitfähige Polymerfilm von der Anode hatte eine Stärke von 30 μm und zeichnete sich durch einen hohen Oberflächenglanz und eine Reißfestigkeit von 60 N/cm$^2$ aus, der Film von der zuletzt als Kathode geschalteten Elektrode war 45 μm stark und hatte eine Leitfähigkeit von 10$^{-3}$ $\Omega^{-1} \cdot$ cm$^{-1}$.

Beispiel 5

Es wurde in einer Elektrolyseapparatur gearbeitet, wie sie schematisch in Fig. 1 dargestellt ist. Der Elektrolyt und die Polymerisationsbedingungen entsprachen denen des Beispiels 1. Als Elektroden wurden rußgefüllte Polyethylenfolien (Leitfähigkeit 10$^{-3}$ $\Omega^{-1}$ cm$^{-1}$) verwendet. Die Filme wurden im Abstand von 1 cm parallel durch den Elektrolyten geführt. Die Polypyrrol-Filme waren bequem von der Folie abzulösen. Der Film, der auf der zuletzt als Anode geschalteten Folie abgezogen wurde, hatte eine Dicke von 22 μm und eine Leitfähigkeit von 80 $\Omega^{-1}$ cm$^{-1}$.

**Patentansprüche**

1. Verfahren zur kontinuierlichen Herstellung von filmförmigen Polymeren von Pyrrolen durch elektrochemische Polymerisation von Pyrrolen oder Mischungen von Pyrrolen mit anderen Comonomeren in einem polaren Elektrolyt-Lösungsmittel in Gegenwart von Leitsalzen unter Abscheiden des filmförmigen Polymeren auf der Oberfläche der Anode, dadurch gekennzeichnet, daß man fortlaufend durch die Elektrolyt-Lösung flächenförmig ausgebildete Elektroden zur Abscheidung des filmförmigen Polymeren hindurchführt und die Elektroden wechselweise als Anode oder Kathode schaltet.

2. Verfahren nach Anspruch 1, dadurch gekennzeichnet, daß die Elektroden mit einer Umpolzeit von 0,01 bis 1 000 Sekunden umgepolt werden.

3. Verfahren nach Ansprüchen 1 und 2, dadurch gekennzeichnet, daß als Elektroden die Oberflächen von endlosen Bändern oder rotierenden Zylindern oder Zylindermänteln dient, von der das gebildete filmförmige Polymere kontinuierlich abgezogen wird.

4. Verfahren nach Anspruchen 1 bis 3, dadurch gekennzeichnet, daß als Elektrodenmaterial leitfähige Polymere mit elektrische Leitfähigkeit oder thermoplastische Polymere verwendet werden, die durch Zusätze von feinteiligen leitfähigen Polymeren oder von Ruß oder von feinteiligen Metallen elektrisch leitfähig ausgerüstet sind.

5. Verfahren nach einem der Ansprüche 1 bis 4, dadurch gekennzeichnet, daß die elektrochemische Polymerisation mit einer Spannung von 1 bis 150 Volt und einer Stromdichte von 0,05 bis 100 mA/cm$^2$ betrieben wird.

**Claims**

1. A process for the continuous production of polypyrrole film by electrochemical polymerization of pyrroles or mixtures of pyrroles with other comonomers in a polar electrolyte solution in the presence of conductive salts, with deposition of the polymer film on the surface of the anode, wherein, for the purpose of depositing the polymer film, sheet-like electrodes are continuously passed through the electrolyte solution, and the electrodes are alternately made the cathode and anode.

2. A process as claimed in claim 1, wherein the polarity of the electrodes is reversed after a period of from 0.01 to 1 000 seconds has elapsed.

3. A process as claimed in claims 1 and 2, wherein the surfaces of endless belts or rotating cylinders or cylindrical shells, from which the polymer film formed is continuously drawn off, serve as electrodes.

4. A process as claimed in claims 1. to 3, wherein electrically conductive polymers or thermoplastic polymers which have been made electrically conductive by the addition of particulate conductive polymers or conductive carbon or particulate metals are used as electrode material.

5. A process as claimed in any of claims 1 to 4, wherein the electrochemical polymerization is carried out at a voltage of from 1 to 150 volts and at a current density of from 0.05 to 100 mA/cm$^2$.

## Revendications

1. Procédé pour la préparation en continu de polymères de pyrroles en forme de film par polymérisation électrochimique de pyrroles ou de mélanges de pyrroles avec d'autres comonomères dans un solvant-électrolyte polaire en présence de sels conducteurs, avec dépôt du polymère en forme de film sur la surface de l'anode, caractérisé en ce qu'on fait passer de façon continue les électrodes réalisées avec une grande surface à travers la solution d'électrolyte en vue du dépôt du polymère en forme de film et on commute les électrodes de sorte qu'elles servent alternativement d'anodes ou de cathodes.

2. Procédé selon la revendication 1, caractérisé en ce que la polarité des électrodes est inversée avec un temps d'inversion de polarité de 0,01 à 1 000 secondes.

3. Procédé selon la revendication 1 ou 2, caractérisé en ce qu'on utilise comme électrodes les surfaces de bandes sans fin ou de cylindres ou surfaces cylindriques en rotation, desquelles le polymère en forme de film formé est enlevé de façon continue.

4. Procédé selon l'une quelconque des revendications 1 à 3, caractérisé en ce qu'on utilise, comme matière pour les électrodes, des polymères conducteurs dotés de conductibilité électrique ou des polymères thermoplastiques qui sont rendus électriquement conducteurs par des additions de polymères conducteurs en fines particules, de noir de fumée ou de métaux finement divisés.

5. Procédé selon l'une quelconque des revendications 1 à 4, caractérisé en ce que la polymérisation électrochimique est conduite avec une tension de 1 à 150 V et une densité de courant de 0,05 à 100 mA/cm$^2$.